(19) Europäisches Patentamt

European Patent Office

Office européen des brevets

(11) **EP 0 718 600 B1**

(12) **FASCICULE DE BREVET EUROPEEN**

(45) Date de publication et mention
de la délivrance du brevet:
**17.04.2002 Bulletin 2002/16**

(51) Int Cl.7: **G01D 5/34**

(21) Numéro de dépôt: **95402831.2**

(22) Date de dépôt: **15.12.1995**

(54) **Dispositif de mesure de la position angulaire d'une partie mobile, notamment d'une antenne, par rapport à une autre partie mécanique**

Messvorrichtung für die Winkelposition eines beweglichen Teiles, insbesondere einer Antenne, mit Bezug auf ein anderes mechanisches Teil

Device to measure the angular position of a mobile part, in particular an antenna, with respect to another mechanical part

(84) Etats contractants désignés:
**DE FR GB IT**

(30) Priorité: **20.12.1994 FR 9415317**

(43) Date de publication de la demande:
**26.06.1996 Bulletin 1996/26**

(73) Titulaire: **Thales**
**75008 Paris (FR)**

(72) Inventeurs:
• **Renault, Michel**
  **F-92402 Courbevoie Cedex (FR)**
• **Mazerolle, Denis**
  **F-92402 Courbevoie Cedex (FR)**
• **Carli, Christian**
  **F-92402 Courbevoie Cedex (FR)**
• **Dubois, Samuel**
  **F-92402 Courbevoie Cedex (FR)**
• **Truchot, Patrick**
  **F-92402 Courbevoie Cedex (FR)**

(74) Mandataire: **Albert, Claude et al**
  **Thomson-CSF Propriété Intellectuelle,**
  **13, Avenue du Président Salvador Allende**
  **94117 Arcueil Cédex (FR)**

(56) Documents cités:
  EP-A- 0 345 093        EP-A- 0 485 292
  CH-A- 535 421          GB-A- 1 045 994

## Description

La présente invention concerne un dispositif de mesure de la position angulaire d'une partie mobile par rapport à une autre partie mécanique. Elle s'applique notamment à la mesure de la position angulaire d'une antenne dans l'espace, la mesure de l'angle permettant le repérage continu d'un référentiel lié à une antenne par rapport à un référentiel fixe. L'invention permet donc notamment de suivre au cours du temps l'orientation, soit de la partie supposée fixe d'un support d'antenne situé en tête d'un mât, auquel le manque de rigidité du mât donne une certaine mobilité, soit directement de la partie tournante d'une antenne. Dans le premier cas, les valeurs de mesures obtenues peuvent par exemple être introduites dans un processus de traitement des signaux pour compenser les dépointages mécaniques du support d'antenne.

Certaines antennes reposent sur des structures, fixes ou mobiles, telles que des mâts ou des plates-formes par exemple. Ces antennes étant par exemple reliées à un système de traitement radar via un système de réception ou d'émission, la précision et la fiabilité du traitement radar imposent notamment de maintenir le dépointage mécanique de l'antenne dans une certaine enveloppe, de l'ordre de quelques milliradians, voire moins, par exemple. Un tel objectif est difficile à assurer. Plusieurs solutions sont cependant connues pour y parvenir avec plus ou moins de succès et avec un coût plus ou moins important.

Une première solution connue consiste à utiliser des structures mécaniques rigides permettant de limiter les déformations, ou plutôt les changements de position de l'antenne, par rapport à une position de référence. Cependant ces structures présentent l'inconvénient d'être lourdes et complexes. Elles sont d'un coût élevé, voire très élevé.

Une deuxième solution connue consiste à utiliser des centrales inertielles. Les mesures déduites de ces systèmes à base d'accéléromètres et de gyroscopes sont ensuite intégrées dans le traitement radar pour compenser les changements de position par rapport à la position de référence. Cette solution permet d'atteindre une bonne précision au niveau de cette compensation. Cependant, plus la précision demandée est bonne, plus le système coûte cher. Il en résulte qu'en pratique cette solution est effectivement chère. Un autre inconvénient propre à cette solution est la dérive de ses paramètres de réglage au cours du temps.

Le document GB-A-1 045 994 divulgue un dispositif de mesure de la position angulaire d'un référentiel mobile (la tête d'un pilote) par rapport à un deuxième référentiel (aéroplane). Le dispositif fonctionne dans un aéroplane mais pas de manière totalement satisfaisante dans un environnement perturbé par les intempéries.

Par ailleurs, le document CH-A 535 421 divulgue un dispositif, associé à une machine outil, pour mesurer la position angulaire d'un corps rotatif. Le document EP-A-0 345 093 divulgue un autre dispositif pour mesurer la position angulaire, la torsion et la vitesse d'un objet en rotation tel qu'un arbre moteur.

Le but de l'invention est de palier les inconvénients précités en utilisant une méthode optique pour mesurer la position angulaire notamment d'une antenne dans l'espace.

Le but de l'invention est atteint par le dispositif décrit dans la revendication 1.

L'invention a pour principaux avantages qu'elle est économique, qu'elle permet d'obtenir une structure plus légère et compacte, qu'elle permet d'obtenir une très bonne précision sans surcoût, qu'elle n'entraîne pas de dérives dans le temps, qu'elle est indépendante des conditions d'environnement, qu'elle permet d'obtenir des temps de réponse rapides et qu'elle est simple à mettre en oeuvre.

D'autres caractéristiques et avantages de l'invention apparaîtront aux revendications suivantes.

- la figure 1 montre un exemple d'un dispositif de mesure de la position angulaire d'une partie mobile par rapport à une autre partie ;
- la figure 2 montre un mode de réalisation d'un dispositif selon l'invention où un rayon émis est défocalisé ;
- la figure 3 montre un mode de réalisation d'un dispositif selon l'invention permettant de mesurer des rotations par rapport à un axe supplémentaire ;
- la figure 4 montre un exemple d'application d'un dispositif selon l'invention à la mesure de la position angulaire d'une antenne.

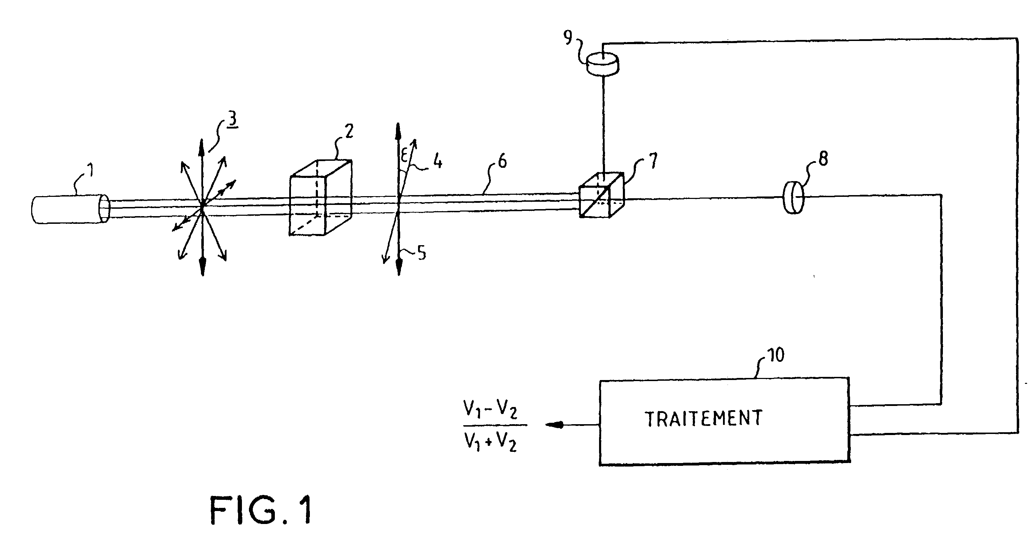

La figure 1 présente un exemple d'un dispositif de mesure de la position angulaire d'une partie mobile par rapport à une autre partie mécanique. Ce dernier utilise notamment la polarisation de la lumière comme moyen de mesure de la position angulaire d'une partie mobile associée à un référentiel, une antenne par exemple, par rapport à une partie fixe associée à un deuxième référentiel. Des moyens 1, 2 pour transmettre une onde lumineuse polarisée sont solidaires mécaniquement de la partie mobile, l'onde polarisée faisant un angle déterminé par rapport à un axe fixe lié à cette partie mobile. La partie fixe comporte des moyens de réception 7 de l'onde polarisée et des moyens 8, 9, 10 pour mesurer l'angle que fait cette onde avec un axe fixe lié à cette partie fixe, la position de cette dernière ayant été préalablement réglée avec l'axe de la partie mobile. La mesure de l'angle précité indique la position angulaire de la partie mobile par rapport à la partie fixe, ses variations peuvent alors être prises en compte par un traitement radar dans le cas d'application à une antenne par exemple.

Dans l'exemple de la figure 1, une source de lumière 1, un laser ou une diode laser par exemple, illumine un polariseur 2. La source de lumière 1 et le polariseur 2 sont liés à un référentiel mobile. La lumière étant non polarisée 3 en sortie de la source 1, le polariseur fournit à sa sortie une onde polarisée 4 dont l'orientation reste fixe par rapport au référentiel mobile, ce dernier étant lié à une antenne ou à une pièce mécanique supportant celle-ci. Par rapport à un référentiel fixe, la polarisation du faisceau issu du polariseur 2 tourne avec le référentiel mobile, la variation d'angle étant égale à l'angle de rotation du référentiel mobile par rapport au référentiel fixe. En position nominale, cet angle est par exemple nul.

Le faisceau 6 atteint un récepteur 7 lié au référentiel fixe. Ce récepteur est par exemple constitué d'un prisme séparateur de polarisation qui permet de décomposer la lumière polarisée suivant au moins deux axes 7', 7". Deux détecteurs d'intensité lumineuse 8, 9 permettent de mesurer les deux composantes obtenues. La mesure des intensités lumineuses $I_x$ et $I_y$ de ces deux composantes permet de définir l'orientation du faisceau lumineux reçu dans le référentiel fixe. Ce dernier a pour origine le récepteur 7 et contient l'axe passant par le récepteur 7 et le premier détecteur 8, et l'axe passant par le récepteur 7 et par le deuxième détecteur 9. En définissant l'orientation du faisceau dans le référentiel fixe, la mesure permet de définir la variation d'angle que fait ce faisceau par rapport à une direction déterminée de ce référentiel fixe, cette variation indiquant la variation angulaire du polariseur 2 lié au référentiel mobile, donc la variation angulaire de ce dernier.

Le premier détecteur 8 fournit par exemple une tension $V_1$ proportionnelle à l'intensité lumineuse qu'il reçoit. Le deuxième détecteur 9 fournit par exemple une tension $V_2$ proportionnelle à l'intensité lumineuse qu'il reçoit. Les détecteurs 8, 9 sont reliés à des moyens de traitement 10 comportant par exemple des amplificateurs des tensions $V_1$, $V_2$ ainsi que des moyens d'addition, de multiplication ou de division de façon à fournir en sortie par exemple une fonction :

$$f = \frac{V_1 - V_2}{V_1 + V_2} \qquad (1)$$

Cette fonction $f$ est proportionnelle à la fonction :

$$f_i = \frac{I_x - I_y}{I_x + I_y} \qquad (2)$$

$I_x$ et $I_y$ étant les intensités lumineuses précédemment définies.

Cette fonction $f_i$ permet de définir l'orientation de l'onde lumineuse polarisée reçue dans le référentiel fixe.

En positionnant le polariseur mobile 2 et le prisme séparateur 7 de façon telle que l'angle nominal qui existe entre eux soit $A = E + \frac{\pi}{4}$, E étant sensiblement nul, le système devient linéaire autour de sa position de référence correspondant à cet angle nominal A. En d'autre terme, la polarisation du polariseur (2) et une polarisation du prisme séparateur (7) font un angle de $\pi/4$. La linéarité s'exprime par le fait que le signal $V_1$, $V_2$ fourni par les détecteurs d'intensité lumineuse 8, 9 est linéaire en fonction de l'angle.

Un autre intérêt de positionner les deux éléments 2, 7 selon l'angle $A = E + \frac{\pi}{4}$, E étant sensiblement nul, est qu'à cette position, pour une variation d'angle donnée, la variation du signal $V_1$, $V_2$ est plus grande.

La valeur de l'angle E + ∆E est donnée par la relation suivante :

$$E + \Delta E = \frac{V_1 - V_2}{2(V_1 + V_2)} = \frac{f_i}{2} \qquad (3)$$

∆E représentant la variation angulaire du référentiel mobile par rapport au référentiel fixe.

En position nominale :

$$\Delta E = O \text{ et } E = \frac{V_1{}^\circ - V_2{}^\circ}{2(V_1{}^\circ + V_2{}^\circ)}, \; V_1{}^\circ \text{ et } V_2{}^\circ$$

étant les tensions délivrées par les détecteurs 8, 9 à cette position nominale. Un traitement du type $\frac{I_x - I_y}{I_x + I_y}$ ou $\frac{V_1 - V_2}{V_1 + V_2}$, $V_1$ et $V_2$ étant proportionnel à Ix et Iy, permet d'obtenir avantageusement une valeur $f = \frac{I_x - I_y}{I_x + I_y}$ proportionnelle à l'angle recherché E + ∆E et indépendante de la puissance lumineuse parvenant sur le récepteur. Cela permet notamment de s'affranchir des variations d'intensité lumineuse liées aux variations des conditions d'environnement qui influent sur l'absorption de la lumière, telles que le brouillard ou la pluie par exemple.

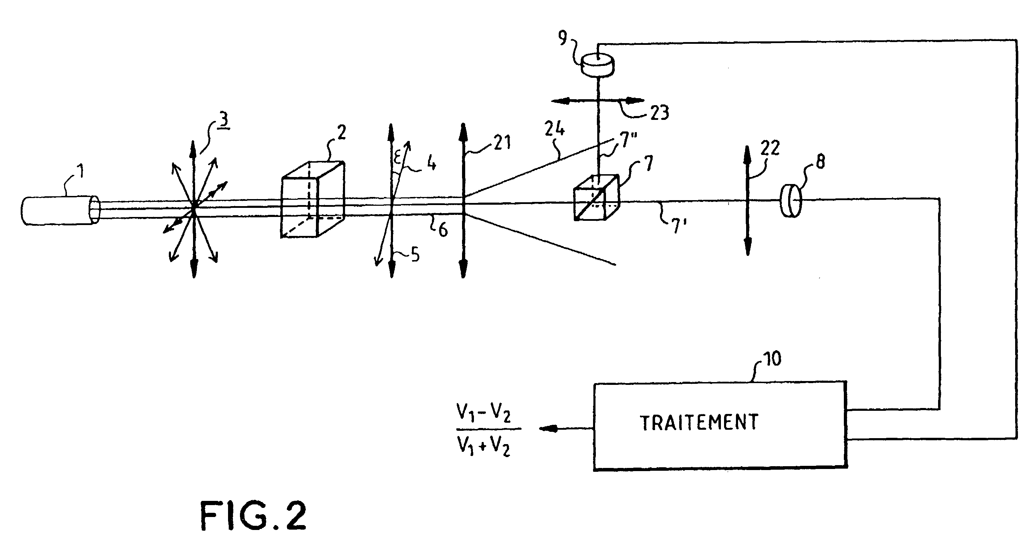

La figure 2 présente un mode de réalisation d'un dispositif selon l'invention. Une lentille de défocalisation 21, liée au référentiel mobile est placée entre le polarisateur 2 et le récepteur 7. Une première lentille de focalisation 22 est placée entre le récepteur 7 et le premier détecteur d'intensité lumineuse 8. Une deuxième lentille de focalisation 23 est placée entre le récepteur 7 et le deuxième détecteur d'intensité lumineuse 9.

Le positionnement d'une lentille derrière le polariseur 2 permet la défocalisation du faisceau 6 et, associé au traitement décrit précédemment, permet de s'affranchir à la fois des phénomènes liés aux translations du référentiel mobile par rapport au référentiel fixe, et de l'influence de la distance entre partie fixe et partie mobile sur les dimensions du système de réception.

En effet, le rayon lumineux transmis reste bien toujours polarisé, mais grâce à sa défocalisation, son cône de défocalisation associé balaye une plus grande partie d'espace. Les dimensions du système de réception peuvent donc être réduites au minimum pour peu que la puissance lumineuse vue par le récepteur soit suffisante pour être mesurée. Ainsi, cette lentille de défocalisation 21 permet d'utiliser un récepteur relativement petit tout en permettant des déplacements importants au niveau d'une antenne par exemple.

Le traitement du type $\dfrac{x-y}{l_x+l_y}$ précité concernant le faisceau polarisé reçu, permet avantageusement de s'affranchir de la puissance lumineuse parvenant au récepteur, pourvu que cette puissance soit suffisante pour être prise en compte par les détecteurs. Cela permet donc de réaliser une mesure fiable indépendamment de la position du récepteur 7 dans le cône de défocalisation 24 du faisceau.

Un dispositif réalisé selon les figures 1 et 2 permet par son utilisation directe la mesure de l'angle de gisement par exemple caractérisant la position d'une antenne par rapport à son axe de rotation.

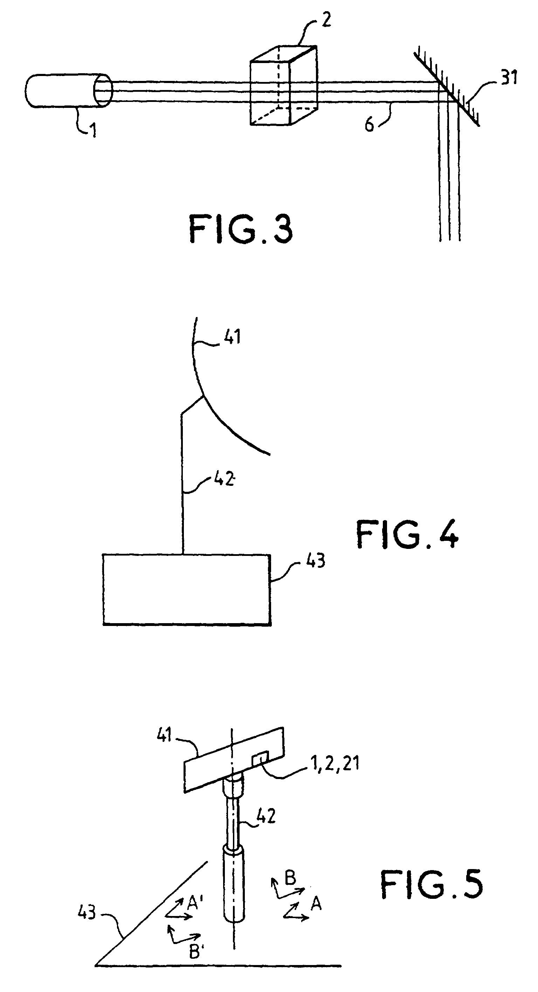

La figure 3, montre qu'un dispositif analogue, utilisant un miroir 31 de renvoi d'angle lié au référentiel mobile et placé par exemple après le polariseur 2 permet la mesure de l'angle de site caractérisant la rotation de l'antenne autour d'un axe horizontal. La chaîne optique qui suit le miroir est par exemple de structure identique ou analogue à celle précédente suivant le polariseur 2. Elle est liée au référentiel fixe. Des moyens de défocalisation 21, et de focalisation 22, 23 peuvent être intercalés de façon analogue. L'utilisation d'un miroir semi-réfléchissant peut permettre de mesurer deux positions angulaires, l'onde réfléchie permettant de mesurer l'angle de site et l'onde directe permettant de mesurer l'angle de gisement.

La figure 4, illustre un exemple d'application de la mesure de la position angulaire d'une antenne 41 supportée par un mât 42 disposé sur un support 43. La source lumineuse 1, le polariseur 2 et éventuellement la lentille de défocalisation 21 et le miroir 31 peuvent être placés sur la tête du mât, ou mieux encore, sur la partie tournante, ce qui permet de capter directement la position de l'antenne. Les autres éléments du dispositif, le récepteur 7, les détecteurs d'intensité lumineuse 8, 9, les moyens de traitement 10 et éventuellement les lentilles de focalisation, sont placés sur le support 43.

La description précédente s'applique à la mesure d'un angle dont la variation est faible de part et d'autre d'une valeur moyenne E, comme c'est le cas lorsque l'on veut connaître avec précision l'orientation de la partie non tournante d'un support d'antenne. Si l'on veut connaître la position de l'antenne elle-même, qui peut être en rotation continue autour de son axe, des précautions supplémentaires doivent être prises :

- Pour minimiser la variation cyclique de sensibilité de la mesure, on pourra sur la partie fixe dupliquer l'ensemble constitué des éléments 7, 8, 9 et 10, les deux ensembles étant décalés angulairement de π/4, de façon à ce que l'un deux soit au maximum de sensibilité lorsque l'autre est au minimum.
- Comme il n'est généralement pas possible de placer la source lumineuse et les capteurs sur l'axe mécanique de rotation d'antenne, l'emploi des techniques de défocalisation et refocalisation, comme les éléments précités 21, 22 et 23, est quasi inévitable.

- Pour éviter qu'au cours de la rotation, l'ensemble des capteurs ne se trouve dans l'ombre du mât 42 par rapport à la source lumineuse, cet ensemble peut être par exemple à nouveau dupliqué, les deux ensembles étant placés de préférence de part et d'autre du mât.

La figure 5 illustre cette application. On y voit les éléments 1, 2, 21 solidaires de l'antenne elle-même. En partie fixe, un ensemble de mesures A comporte les autres éléments 7, 8, 9, 10, 22, 23. Il est associé à un ensemble B identique à A, mais décalé angulairement de π/4. Les ensembles A et B sont dupliqués en A' et B' de l'autre côté du mât 42.

Le récepteur 7 n'est éventuellement pas constitué d'un prisme séparateur, il peut être constitué d'un simple polariseur. Dans ce cas l'angle est mesuré dans une optique moins linéaire. Ce mode de réalisation ne permet pas alors de s'affranchir des conditions d'environnement.

Si le récepteur 7 est bien un prisme séparateur, les moyens de traitement peuvent être simplifiés et fournir seulement un signal proportionnel à $\dfrac{x}{l_x+l_y}$ ou $\dfrac{y}{l_x+l_y}$ ou encore $\dfrac{x}{l}$ ou équivalent, c'est à dire du type d'un rapport de combinaisons d'intensités lumineuses mesurées par les détecteurs. Les mesures obtenues sont alors moins précises mais peuvent cependant rester acceptables, en particulier elles continuent à être indépendantes des puissances reçues et donc des conditions d'environnement.

Enfin, la chaîne optique utilisée permet d'obtenir de très faibles temps de réponse sur la position en temps réel d'une antenne par exemple.

Par ailleurs, les éléments utilisés sont peu coûteux. Ils sont aussi légers. Ils permettent d'obtenir de très bonnes précisions pour un faible coût. Ces éléments ne présentent pas de dérives dans le temps, et donc le dispositif selon l'invention ne présente pas lui non plus de dérives dans le temps.

Il est a noter que les éléments 1, 2, 21, 31 liés au référentiel mobile pourraient être liés au référentiel fixe, et ceux 7, 8, 9, 22, 23, 10 liés au référentiel fixé pourraient alors être liés au référentiel mobile.

En ce qui concerne le référentiel fixe, celui-ci est fixe par rapport au référentiel mobile, mais il pourrait cependant être mobile lui aussi par rapport à un troisième référentiel.

## Revendications

1. Dispositif de mesure de la position angulaire d'un référentiel mobile lié à une antenne (41) par rapport à un deuxième référentiel, lié à un support (43), comportant au moins :

- une source lumineuse (1), liée au référentiel mobile, pour transmettre une onde lumineuse,
- un polariseur (2), lié au référentiel mobile, pour polariser l'onde lumineuse suivant une direction faisant un angle déterminé (E) par rapport à un axe donné (5) du référentiel mobile,
- des moyens de réception (7) de l'onde polarisée, liés au deuxième référentiel, pour décomposer la lumière en signaux de réception suivant au moins deux axes (7', 7"),
- deux détecteurs (8, 9) d'intensité lumineuse, liés au deuxième référentiel, pour mesurer l'intensité lumineuse ($I_x$, $I_y$) des signaux de réception, chaque détecteur (8,9) étant disposé le long d'un des axes, **caractérisé en ce qu'il** comporte
- des moyens de défocalisation (21) liés au référentiel mobile pour défocaliser l'onde polarisée (6,4) et
- des moyens de traitement (10), liés au deuxième référentiel, pour calculer le rapport $\dfrac{I_x - I_y}{I_x + I_y}$ où

  $I_x$ est l'intensité lumineuse mesurée selon le premier axe (7')
  $I_y$ est l'intensité lumineuse mesurée selon le deuxième axe (7").

2. Dispositif selon la revendication 1, **caractérisé en ce que** :

- les moyens de réception (7) comprennent un prisme séparateur de polarisation pour décomposer la lumière suivant au moins les deux axes (7', 7"), et deux lentilles de focalisation (22,23),
- les moyens de défocalisation consistent en une lentille de défocalisation (21).
- la source lumineuse (1), le polariseur (2), et la lentille de défocalisation sont agencés de manière à ce que ladite source lumineuse (1) illumine ledit polariseur (2), lequel transmet une onde polarisée (4) à la lentille de défocalisation,
- le prisme séparateur (7) est situé dans le cône de défocalisation (24) de la lentille de manière à délivrer deux ondes lumineuses suivant les deux axes (7', 7"),
- chaque détecteur (8, 9) est placé sur un des axes (7', 7"), les détecteurs (8, 9) étant reliés aux moyens de traitement (10) des intensités mesurées,
- chaque lentille de focalisation (22, 23) est intercalée entre le prisme séparateur (7) et un des détecteurs (8,9) et
- le signal fourni par les moyens de traitement (10) est représentatif de la position angulaire du référentiel mobile par rapport au deuxième référentiel.

3. Dispositif selon la revendication 2, **caractérisé en**

**ce que** la polarisation du polariseur (2) et une première polarisation du prisme séparateur (7) font un angle de π/4.

4. Dispositif selon l'une quelconque des revendications précédentes, **caractérisé en ce qu'**il comprend en outre :

- un miroir (31) de renvoi d'angle, lié au référentiel mobile, intercalé entre le polariseur (2) et les moyens de réception (7), pour mesurer la position angulaire suivant une direction non parallèle à la direction de l'onde lumineuse transmise par les moyens (1,2) de transmission.

5. Dispositif selon la revendication 4, **caractérisé en ce que** le miroir (31) est semi-réfléchissant pour permettre la mesure de deux positions angulaires.

6. Dispositif selon l'une quelconque des revendications précédentes, **caractérisé en ce que** :

- l'ensemble (A) constitué des moyens de réception (7), des détecteurs (8,9) et des moyens de traitement (10) est dupliqué (B) pour minimiser la variation cyclique de sensibilité de la mesure, les deux ensembles (A,B) étant décalés angulairement de π/4.

7. Dispositif selon la revendication 6, **caractérisé en ce que** les deux ensembles (A, B) sont dupliqués (A', B') symétriquement par rapport au mât (42).

**Patentansprüche**

1. Vorrichtung zum Messen der Winkelposition eines mit einer Antenne (41) verbundenen beweglichen Bezugssystems in bezug auf ein mit einem Träger (43) verbundenes zweites Bezugssystem, die wenigstens umfaßt:

- eine Lichtquelle (1), die mit dem beweglichen Bezugssystem verbunden ist, um eine Lichtwelle zu senden,

- einen Polarisator (2), der mit dem beweglichen Bezugssystem verbunden ist, um die Lichtwelle in einer Richtung zu polarisieren, die in bezug auf eine gegebene Achse (5) des beweglichen Bezugssystems einen bestimmten Winkel (E) bildet,

- Empfangsmittel (7) für die polarisierte Welle, die mit dem zweiten Bezugssystem verbunden sind, um das Licht in Empfangssignale längs wenigstens zweier Achsen (7', 7") zu zerlegen,

- zwei Lichtstärke-Detektoren (8, 9), die mit dem zweiten Bezugssystem verbunden sind, um die Lichtstärke ($I_x$, $I_y$) der Empfangssignale zu messen, wobei jeder Detektor (8, 9) auf einer der Achsen angeordnet ist,

   **dadurch gekennzeichnet, daß** sie umfaßt:

- Defokussierungsmittel (21), die mit dem beweglichen Bezugssystem verbunden sind, um die polarisierte Welle (6, 4) zu defokussieren, und

- Verarbeitungsmittel (10), die mit dem zweiten Bezugssystem verbunden sind, um das Verhältnis

$$\frac{I_x - I_y}{I_x + I_y}$$

   zu berechnen, wobei

   $I_x$ die längs der ersten Achse (7') gemessene Lichtstärke ist

   $I_y$ die längs der zweiten Achse (7") gemessene Lichtstärke ist.

2. Vorrichtung nach Anspruch 1, **dadurch gekennzeichnet, daß**:

- die Empfangsmittel (7) ein Polarisationstrennprisma zum Zerlegen des Lichts wenigstens längs der beiden Achsen (7', 7") und zwei Fokussierungslinsen (22, 23) umfassen,

- die Defokussierungsmittel aus einer Defokussierungslinse (21) bestehen,

- die Lichtquelle (1), der Polarisator (2) und die Defokussierungslinse in der Weise angeordnet sind, daß die Lichtquelle (1) den Polarisator (2) beleuchtet, der zur Defokussierungslinse eine polarisierte Welle (4) sendet,

- das Trennprisma (7) sich im Defokussierungskegel (24) der Linse befindet, um zwei Lichtwellen längs der beiden Achsen (7', 7") zu liefern,

- jeder Detektor (8, 9) auf einer der Achsen (7', 7") angeordnet ist, wobei die Detektoren (8, 9) mit den Mitteln (10) zum Verarbeiten der gemessenen Stärken verbunden sind,

- jede Fokussierungslinse (22, 23) zwischen das Trennprisma (7) und einen der Detektoren (8, 9) eingefügt ist, und

- das von den Verarbeitungsmitteln (10) gelieferte Signal die Winkelposition des beweglichen Bezugssystems in bezug auf das zweite Bezugssystem darstellt.

3. Vorrichtung nach Anspruch 2, **dadurch gekennzeichnet, daß** die Polarisation des Polarisators (2) und eine erste Polarisation des Trennprismas (7) einen Winkel von π/4 bilden.

4. Vorrichtung nach einem der vorhergehenden Ansprüche, **dadurch gekennzeichnet, daß** sie außerdem umfaßt:

- einen Umlenkspiegel (31), der mit dem beweglichen Bezugssystem verbunden ist und zwischen den Polarisator (2) und die Empfangsmittel (7) eingefügt ist, um die Winkelposition in bezug auf eine Richtung zu messen, die zu der Richtung der von den Sendemitteln (1, 2) gesendeten Lichtquelle nicht parallel ist.

5. Vorrichtung nach Anspruch 4, **dadurch gekennzeichnet, daß** der Spiegel (31) halbreflektierend ist, um die Messung zweier Winkelpositionen zu ermöglichen.

6. Vorrichtung nach einem der vorhergehenden Ansprüche, **dadurch gekennzeichnet, daß**:

- die Gesamtheit (A), die aus den Empfangsmitteln (7), den Detektoren (8, 9) und den Verarbeitungsmitteln (10) gebildet ist, verdoppelt (B) ist, um die zyklische Veränderung der Meßempfindlichkeit minimal zu machen, wobei die beiden Gesamtheiten (A, B) in Winkelrichtung um π/4 versetzt sind.

7. Vorrichtung nach Anspruch 6, **dadurch gekennzeichnet, daß** die beiden Gesamtheiten (A, B) in bezug auf den Mast (42) symmetrisch verdoppelt (A', B') sind.

**Claims**

1. Device for measuring the angular position of a mobile reference frame tied to an antenna (41) with respect to a second reference frame, tied to a support (43), comprising at least:

- a light source (1), tied to the mobile reference frame, for transmitting a light wave,
- a polarizer (2), tied to the mobile reference frame, for polarizing the light wave in a direction making a specified angle (E) with respect to a given axis (5) of the mobile reference frame,
- means of reception (7) of the polarized wave, tied to the second reference frame, for decomposing the light into reception signals along at least two axes (7', 7"),
- two light intensity detectors (8, 9), tied to the second reference frame, for measuring the light intensity ($I_x$, $I_y$) of the reception signals, each detector (8, 9) being disposed along one of the axes, **characterized in that** it comprises:

    - defocusing means (21) tied to the mobile reference frame for defocusing the polarized wave (6, 4) and
    - processing means (10) tied to the second reference frame, for calculating the ratio $\dfrac{I_x - I_y}{I_x + I_y}$ where

        $I_x$ is the light intensity measured along the first axis (7'),
        $I_y$ is the light intensity measured along the second axis (7").

2. Device according to Claim 1, **characterized in that**:

    - the reception means (7) comprise a polarization splitter prism for decomposing the light along at least the two axes (7', 7"), and two focusing lenses (22, 23),
    - the defocusing means consist of a defocusing lens (21),
    - the light source (1), the polarizer (2), and the defocusing lens are arranged in such a way that the said light source (1) illuminates the said polarizer (2), which transmits a polarized wave (4) to the defocusing lens,
    - the splitter prism (7) is situated in the defocusing cone (24) of the lens in such a way as to deliver two light waves along the two axes (7', 7"),
    - each detector (8, 9) is placed on one of the axes (7', 7"), the detectors (8, 9) being linked to the means of processing (10) the measured intensities,
    - each focusing lens (22, 23) is interposed between the splitter prism (7) and one of the detectors (8, 9) and
    - the signal provided by the processing means (10) is representative of the angular position of the mobile reference frame with respect to the second reference frame.

3. Device according to Claim 2, **characterized in that** the polarization of the polarizer (2) and a first polarization of the splitter prism (7) make an angle of π/4.

4. Device according to any one of the preceding claims, **characterized in that** it furthermore comprises:

- an angle deviating mirror (31), tied to the mobile reference frame, interposed between the polarizer (2) and the means of reception (7), for measuring the angular position along a direction not parallel to the direction of the light wave transmitted by the transmission means (1, 2).

5. Device according to Claim 4, **characterized in that** the mirror (31) is semi-reflecting so as to allow the measurement of two angular positions.

6. Device according to any one of the preceding claims, **characterized in that**:

    - the assembly (A) consisting of the means of reception (7), the detectors (8, 9) and the processing means (10) is duplicated (B) so as to minimize the cyclic variation of sensitivity of the measurement, the two assemblies (A, B) being angularly offset by π/4.

7. Device according to Claim 6, **characterized in that** the two assemblies (A, B) are duplicated (A', B') symmetrically with respect to the mast (42).

$$\frac{V_1 - V_2}{V_1 + V_2}$$

TRAITEMENT

FIG.1

$$\frac{V_1-V_2}{V_1+V_2} \leftarrow$$

TRAITEMENT

# FIG.2

# FIG.3

# FIG.4

# FIG.5